(19) Europäisches Patentamt
European Patent Office
Office européen des brevets

(11) EP 3 450 078 A1

(12) EUROPEAN PATENT APPLICATION

(43) Date of publication:
06.03.2019 Bulletin 2019/10

(51) Int Cl.:
B23K 20/12 (2006.01)    B23K 20/22 (2006.01)
B23K 103/18 (2006.01)

(21) Application number: 17189464.5

(22) Date of filing: 05.09.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(71) Applicant: Siemens Aktiengesellschaft
80333 München (DE)

(72) Inventors:
• KALURI, Ramsatish
  560100 Bangalore (IN)
• NAIR, Sudev
  560078 Bangalore (IN)

(74) Representative: Patentanwaltskanzlei WILHELM & BECK
Prinzenstraße 13
80639 München (DE)

(54) **FRICTION STIR WELDING APPARATUS AND METHOD WITH THERMAL CONTROL**

(57)  A Friction Stir Welding (FSW) apparatus (200) for welding work-pieces (224) is provided. The FSW apparatus includes a pin tool with a penetration axis along an axis of penetration of the work-pieces (224). The FSW apparatus (200) comprises a thermal control unit (232) comprising at least one heating element (216) in thermal contact with the work-pieces (224), the at least one heating element (216) arranged along the penetration axis to effectively plasticize the work-pieces at a weld region, whereby a plunge force required by the pin tool to penetrate the weld region is reduced.

FIG 2A

**Description**

The present invention relates to friction stir welding tool and apparatus for optimized energy consumption.

Friction stir welding (FSW) apparatus is used joining work-pieces of materials such as metals. The FSW apparatus has a shoulder tool and pin tool extending towards the work-pieces. During the operation of the FSW apparatus, the pin tool is brought in contact with the material of both the work-pieces. The rotational movement of the pin tool in the materials produces a large amount of frictional heating the joint between the work-pieces. This heat softens the material of the work-pieces in the vicinity of the pin tool and results in mingling of material from the two work-pieces to form a weld.

Current FSW apparatus need plunge force of about 30 kN for high yield strength materials like copper. The requirement of large plunge force in turn results in high energy consumption by the FSW apparatus.

A method for FSW with low friction used to plasticize is already disclosed in US 9033205 B2. The method disclosed therein teaches determining the temperature of one or both parts being welded. The parts may then be heated to a desired temperature and then friction stir welded together. By preheating the parts, the friction required to plasticize the parts during welding may be reduced. Another method disclosed in US6793118 B2 teaches the use of laser to preheat the work-pieces. Another FSW apparatus disclosed in US7832613 B2 teaches the use of heating and cooling channels in a backing plate of the FSW apparatus.

The above mentioned FSW apparatuses are directed to improving the quality of the weld and the longevity of the pin tool. However, the above mentioned apparatuses do not address the high plunge force required while welding. Therefore, the known FSW apparatus require high power and are bulky.

Therefore, it is an object of the present invention to provide a friction stir welding tool and apparatus of the aforementioned kind that reduces the energy required by the FSW apparatus by optimally heating the work-pieces in a localized manner.

The invention achieves this object in that the friction stir welding apparatus includes one or more heating elements arranged along a penetration axis of the pin tool to plasticize the work-pieces at a weld region. The plasticized weld region ensures that a plunge force required by the pin tool to penetrate the weld region is reduced.

According to a first aspect of the present invention, a friction stir welding (FSW) apparatus comprising a pin tool, a pin drive mechanism, a shoulder tool and a thermal control unit is provided. The pin tool of the FSW apparatus has a length with a penetration end and a shoulder end. As used herein, "penetration end" relates to an end of the pin tool that is in contact with the work-pieces that are to be welded. The term "weld region" refers to a joint between the work-pieces where the pin tool is plunged to create the weld. After the welding action is performed the weld region is referred to as the welded region or Weld nugget and Thermal Mechanical Affected Zone (TMAZ). The pin tool also includes a penetration axis extending through a length of pin tool. As used herein the "penetration axis" is an imaginary line that indicates the path of the pin tool as it plunges into the work-pieces.

In certain embodiments, the pin tool includes a pin tool holder separable or fused with the pin tool. The pin tool holder operatively connects the pin tool with a spindle housing of the FSW apparatus to facilitate rotation of the pin tool. The rotation of the pin tool is driven by a pin drive mechanism that is capable of rotating the pin tool via a spindle.

The FSW apparatus also includes a thermal control unit including the one or more heating elements in thermal contact with the work-pieces. In the current embodiment, one heating element is used. The heating element is arranged along the penetration axis to effectively plasticize the work-pieces at the weld region. In an embodiment, the heating element heats the weld region to a near plastic state and in combination with the pin tool the weld region is plasticized. By heating the weld region prior to the pin tool penetrating the weld region a plunge force required by the pin tool to penetrate the weld region is significantly reduced.

The shoulder tool of the FSW apparatus is provided above the pin tool. The shoulder tool has a pin-side end that is towards the pin tool. The pin-side end of the shoulder tool is maintained on the surface of the joint between the work-pieces to generate frictional heat and forging pressure. The pin-side end of the shoulder tool and the pin tool in combination are configured to perform a churning action in the weld region to advantageous obtain a homogenous weld.

According to an embodiment of the present invention, the pin tool has a cylindrical head with the penetration end and the shoulder end, the cylindrical head comprising a profiled perimeter, wherein the profile perimeter is configured to generate a churning action in the weld region. For example, the pin tool has 9 mm Diameter cylindrical head with 0.5mm radial lip as the profiled perimeter. The heating of the weld region to achieve plasticized state ensures the smooth entry of the cylindrical head of the pin tool. If the weld region is not in the plasticized state, the cylindrical head of the pin tool may chip the work-pieces when contact is made.

According to another embodiment of the present invention, the profiled perimeter of the cylindrical head is provided with multiple flutes. As used herein "flutes" refer to tooth like shapes that are along the perimeter of the cylindrical head. The profiled perimeter can be configured with helical flutes, straight flutes, involute flutes etc. In a preferred embodiment, the profiled perimeter has a helical profile comprising multiple helical flutes arranged at an angle with respect to the penetration axis. The helical flutes are designed to create helical paths for plasticized material in the weld region to flow. The helical path is advantageous as it is capable of generating high stirring or churning action. Therefore, the weld region material will be perfectly mixed by the churning action of the cylindrical head using the helical flutes. The churning action thereby improves homogeneity of the weld region, which in turn results in refined grain size of the weld region. Also, the yield and tensile strength of the welded region is improved.

According to yet another embodiment of the present invention, the cylindrical head tapers from the shoulder end towards the penetration end. The shoulder end of the cylindrical head of the pin tool abuts the shoulder tool of the FSW apparatus. In a preferred embodiment, the pin-side end of the shoulder tool is configured with an angled profile. As used herein, the angled profile refers to a concave-like profile of the pin-side end. The angled profile enables the churning action of the pin tool. The angled profile is advantageous as it ensures that the plasticized weld in the weld region is contained during the churning action of the pin tool.

According to an embodiment of the present invention, the work-pieces include a top penetration side where the pin tool penetrates the work-pieces and a bottom non-penetration side where the heating element heats the work-pieces. Accordingly, the heating element is programmed such a way that the heating is restricted to the weld region beneath the pin tool before the pin tool plunges into the work-pieces. The arrangement of the heating element at the bottom non-penetration side of the work-pieces is advantageous as the plunge force required by the pin tool to plunge into the weld region is significantly reduced. Additionally, the arrangement ensures easy incorporation of the heating element in already existing FSW apparatuses.

According to another embodiment of the present invention, the pin tool is configured to advance along a traverse axis in a direction of weld (parallel to a weld axis). The heating element is also advanced along the traverse axis at an offset prior to advancement of the pin tool. After the heating element heats the weld region beneath the pin tool, the pin tool is plunged into the weld region. Upon plunging of the pin tool, the heating element traverses a pre-determined distance along the traverse axis and heats the work-pieces. The heating element is therefore able to aid in smooth movement of the pin tool as the pin tool always encounters the weld region in the plasticized or near plasticized state. Accordingly, the pin tool is mainly utilized for mixing of plasticized material at the weld region for high weld quality.

According to yet another embodiment of the present invention, the thermal control unit includes a thermistor to measure a weld temperature of the weld region. Due heat generation from friction between the pin tool and the work-pieces, adjacent parts would be heated. Accordingly, the thermistor is used to determine a surface temperature of the work-pieces while the pin tool is working. The measured weld temperature and the surface temperature are compared with preset thresholds to determine whether the heating is excessive. In a preferred embodiment, the thermal control unit includes a controller configured to control the heating element to adjust the heating based on the preset thresholds. The controller is also configured to perform a Finite Element Analysis to predict the thermal characteristics of the weld region and the work-pieces.

The thermal control unit also includes a cooling element arranged in thermal contact with the work-pieces. The cooling element cools the weld region when the weld temperature exceeds the preset threshold.

According to an embodiment of the present invention, the thermal control unit is configured to preferential heat work-pieces with dissimilar material. The preferential heat is achieved by using different heating elements and controlling the heat generated. Alternatively, a single heating element in combination with the cooling element is capable of ensuring that the dissimilar work-pieces are only plasticized and no further melting takes place.

In a preferred embodiment, the thermal control unit adjust the heating when different metals or metal of various thicknesses are welded such that the plunge force required does not exceed the rated limit of the FSW apparatus.

According to another embodiment of the present invention, the heating element is a laser source, a microwave source or a resistive heat source. In preferred embodiment, a diode-based laser heat source may be used. This laser has shorter wavelength and it is preferred due to high absorptive for copper. The diode lasers are also more efficient in terms of converting the input electrical energy to laser power. Further, their small size facilitates easy integration of diode lasers to the FSW apparatus. The work-pieces may be roughened to enhance the absorbance of the laser.

According to a second aspect of the present invention, a method of Friction Stir Welding (FSW) work-pieces with a FSW apparatus is provided. The FSW method begins with heating a weld region of the work-pieces along the penetration axis of the pin tool to plasticize the work-pieces at the weld region. In case of dissimilar materials as the work-pieces, preferential heating of the work pieces is performed. In a preferred embodiment, Finite Element Analysis (FEA) is performed on thermal characteristics of the weld region and the work-piece. The FEA is used to determine the temperature required to plasticize the weld region.

Once the weld region is a plasticized state, the pin tool is plunged to penetrate the weld region upon plasticization of the weld region. As the weld region is in the plasticized state a plunge force required by the pin tool to penetrate the weld region is reduced. The method also includes homogenizing the weld region upon plasticization of the weld region by a churning action of the pin tool.

According to an embodiment, the method includes measuring a weld temperature of the weld region and a surface temperature of the work-pieces. Further, cooling rates of the weld region and work-pieces is adjusted based upon comparison between weld temperature, surface temperature and preset thresholds. By adjusting the weld temperature optimal heating of the weld region is ensured.

According to another embodiment, the method includes advancing the heating element along a traverse axis in a direction of weld at an offset, prior to advancement of the pin tool.

The present invention is advantageous as the localized heating from the bottom non-penetration side ensures that the temperature on the top penetration side of the work-pieces is maintained close to or at the plasticized state. Accordingly, the invention ensures reduction in the plunge force requirement by the pin tool. Therefore, a low power pin drive mechanism is sufficient to perform the friction stir welding. For example, at present pin dive mechanisms need to support around 20~30kN load for copper welding. With the present invention small robots can be used for FSW of copper.

Further, by dynamically controlling movement & heating rate of the heating element the welded region exhibits improved properties. Furthermore, the churning action of the pin tool results in refinement of grain (fine grain) which in turn generates higher yield and tensile strength of the welded region.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1 is a schematic representation of a Friction Stir Welding (FSW) apparatus in accordance with the present invention;

FIG 2A is a schematic representation of operation of a FSW apparatus in accordance with the present invention;

FIG 2B is a schematic representation of movement of a heating element of the FSW apparatus in FIG 2A;

FIG 3 is a schematic representation of operation of a heating element and pin tool of the FSW apparatus in FIG 2;

FIG 4A illustrates a front view of a pin tool of a FSW apparatus in accordance with the present invention;

FIG 4B illustrates an isometric view of the pin tool in FIG 4A;

FIG 5 is a schematic representation of the operation of the pin tool in FIG 4A; and

FIG 6 is a schematic representation of a pin tool and a shoulder tool of a FSW apparatus in accordance with the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

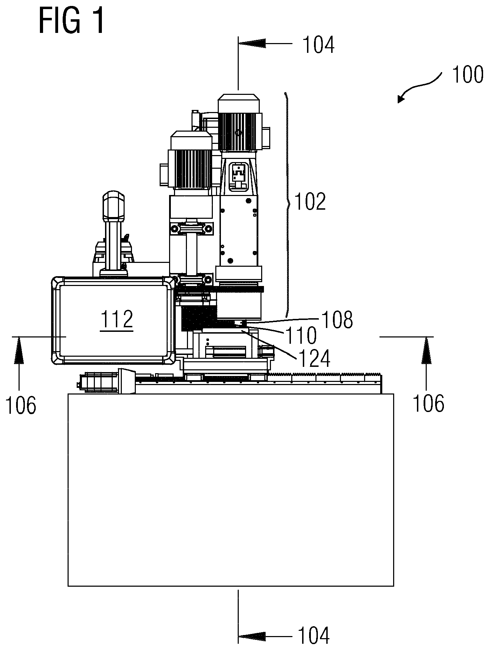

FIG 1 is a schematic representation of a Friction Stir Welding (FSW) apparatus (100) in accordance with the present invention. The FSW apparatus 100 comprising a pin tool 110, a pin drive mechanism 102, a shoulder tool 108 and a thermal control unit 112. The pin tool 110 of the FSW apparatus 100 has a length with a penetration end and a shoulder end (not shown in FIG 1). The pin tool 110 also includes a penetration axis 104 extending through the length of pin tool 110. As used herein the "penetration axis" 104 is an imaginary line that indicates the path of the pin tool as it plunges into work-pieces 124.

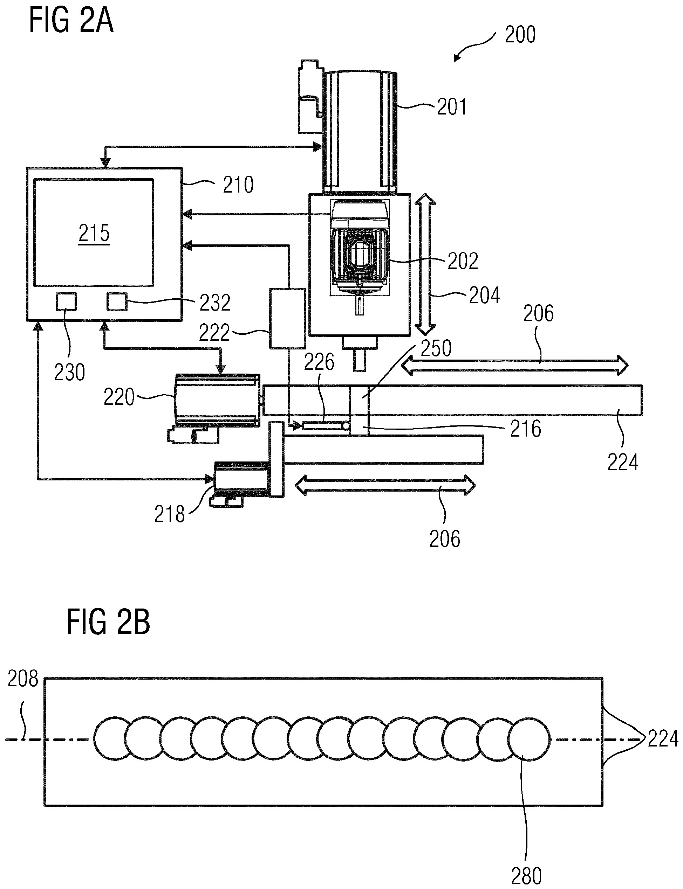

The FSW apparatus 100 also includes a thermal control unit 112 including the one or more heating elements (not visible in FIG 1) in thermal contact with the work-pieces 124. The heating elements are arranged along the penetration axis 104 to effectively plasticize the work-pieces at the weld region. In an embodiment, the heating element heats the weld region to a near plastic state and in combination with the pin tool the weld region is plasticized. By heating the weld region prior to the pin tool 110 penetrating the weld region, the plunge force required by the pin tool 100 to penetrate the weld region is significantly reduced. The operation of the heating element in relation to the pin tool 110 is further elaborated in FIG 2.

Upon plunging of the pin tool 100, the heating element traverses few millimeters along a traverse axis 106 and heats the work-pieces 124. As used herein "traverse axis" refers to the direction of the weld. In other words, the traverse axis is path traced by the pin tool 110 when welding the work pieces 124. The heating element is able to aid in smooth movement of the pin tool 110 as the pin tool 110 always encounters the weld region in the plasticized or near plasticized state. The pin tool 110 in combination with the shoulder tool 108 performs mixing of plasticized material at the weld region for high weld quality.

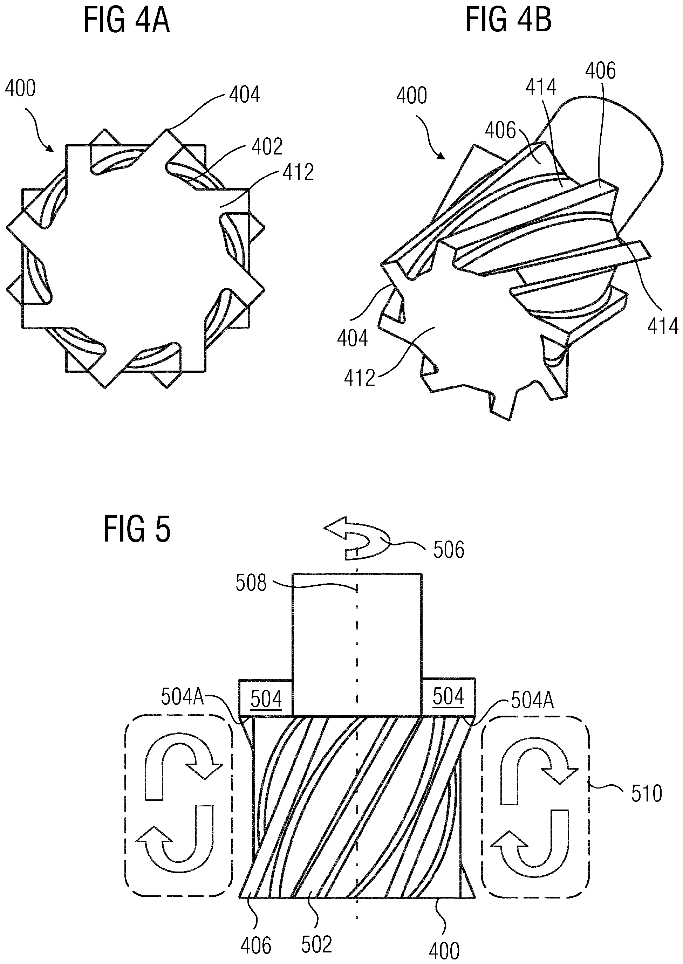

The shoulder tool 108 of the FSW apparatus 100 has a pin-side end that is towards the pin tool 110. The pin-side end of the shoulder tool 108 is maintained on the surface of the joint between the work-pieces 124 to generate frictional heat and forging pressure. The pin-side end of the shoulder tool 108 and the pin tool 110 in combination are configured to perform a churning action in the weld region to advantageous obtain a homogenous weld. This churning action is explained in FIG 5.

FIG 2A is a schematic representation of operation of a FSW apparatus 200 in accordance with the present invention. The FSW apparatus 200 includes a pin motor 201 and a pin spindle 202 to drive a pin tool 212. The pin tool 212 penetrates work-pieces 224 along a penetration axis 204 by means of the pin motor 201 and the pin spindle 202. The pin tool 212 traverses along a traverse axis 206 by means of a pin traverse motor 220. The pin traverse motor 206 enables the pin tool to traverse the weld region to perform welding and churning action.

The FSW apparatus 200 also includes a control unit 210 including a display 215, a processor 230 and a thermal control unit 232. Additionally, a user using the control unit 210 can access the FSW apparatus 200 via a GUI (graphic user interface). The GUI is, for example, an online web interface, a web based downloadable application interface, etc.

The thermal control unit 232 includes a motor 218, a heating element 216, a Proportional-Integral-Derivative (PID) controller 222 and a thermistor 226. The motor 218 is connected to the heating element 216 to enable the heating element to traverse length of the work-pieces in the direction of weld. The heating element 216 heats the weld region 250 to a plastic state. Alternatively, the heating element 216 heats the weld region 250 to a near plastic state and in combination with the pin tool 212 the weld region 250 is plasticized.

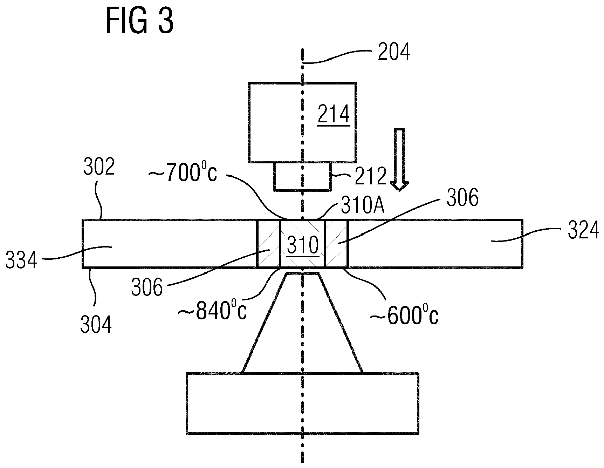

The thermal control unit 232 includes the thermistor 226 to measure a weld temperature of the weld region 250. Due heat generation from friction between the pin tool 212 and the work-pieces 224, adjacent parts would be heated (shown in FIG 3). Accordingly, the thermistor 212 is used to determine a surface temperature of the work-pieces 224 while the pin tool 212 is working. The PID controller 222 monitors the weld temperature and the surface temperature and controls the temperature by cutting power supply to the heating element 216. The PID controller 222 compares the measured weld temperature and the surface temperature with preset thresholds to determine whether the heating is excessive. For example, if the weld temperature exceeds 850°C there may be a high risk of localized melting. Therefore, the PID controller 222 will cut of the power supply to the heating element 216.

Alternatively, the thermal control unit 232 can also include a cooling element (not shown in FIG 2A) arranged in thermal contact with the work-pieces 224. The cooling element cools the weld region when the weld temperature exceeds the preset threshold.

The thermal control unit 232 is also configured to perform a Finite Element Analysis (FEA) to predict the thermal characteristics of the weld region 250 and the work-pieces 224. FEA is also used in case of work-pieces 224 with dissimilar materials. The thermal control unit 232 performs FEA and accordingly controls the heating element 216 to preferential heat work-pieces with dissimilar material. The preferential heat can be achieved by using different heating elements and controlling the heat generated. Alternatively, the heating element 216 in combination with the cooling element is capable of ensuring that the dissimilar work-pieces are only plasticized and no further melting takes place.

As shown in FIG 2A, the pin tool 212 is configured to advance along the traverse axis 206 in a direction of weld. Similarly, the heating element 216 is also advanced along the traverse axis 206. The heating element 216 is typically at an offset prior to advancement of the pin tool 212. The movement of the heating element 216 is illustrated in FIG 2B. As shown in FIG 2B, the heating element 216 is programmed by the thermal control unit 232 such that the heat is linearly indexed 280 in the direction of weld.

After the heating element 216 heats the weld region 250 beneath the pin tool 212, the pin tool 212 is plunged into the weld region 250. Upon plunging of the pin tool 212, the heating element 216 traverses few millimeters along the traverse axis 206 and heats the work-pieces 224. The heating element 216 is therefore able to aid in smooth movement of the pin tool 212 as the pin tool 212 always encounters the weld region in the plasticized or near plasticized state. By heating the weld region 250 prior to the pin tool 110 penetrating the weld region 250, the plunge force required by the pin tool 100 to penetrate the weld region 250 is significantly reduced. The operation of the heating element 216 is further elaborated in FIG 3.

FIG 3 is a schematic representation of operation of the heating element 216 and the pin tool 212. The FSW operation is performed on the work-pieces 324 and 334. In an embodiment, the work-pieces 324 and 334 are made out of copper. The work-pieces 324 and 334 include a top penetration side (top side) 302 where the pin tool 212 penetrates the work-pieces 324 and 334, indicated by 310A. The work-pieces 324 and 334 include a bottom non-penetration side (bottom side) 304 where the heating element 216 heats the work-pieces 324 and 334. The heating element 216 is programmed such a way that the heating is restricted to the weld region 310 beneath the pin tool 212 before the pin tool 212 plunges into the work-pieces 324 and 334.

The arrangement of the heating element 216 results in higher heat at the bottom side 304 and lesser heat at the top side 302. For example, if the heat at the side 304 is 840°C then the top penetration side 302 exhibits 700°C temperature. Further, time is lapsed for the heat to spread from the bottom side 304 to the top side 302. For example, 30 seconds is elapsed for the heat to reach the top side 302 to get the required heat for plunging the pin tool 212. Furthermore, the heat from the weld region 310 spreads to the surrounding region 306 under the shoulder tool 214.

The arrangement of the heating element 216 at the bottom non-penetration side 304 is advantageous as the plunge force required by the pin tool 212 to plunge into the weld region 310 is significantly reduced. Additionally, the arrangement ensures easy incorporation of the heating element 216 in already existing FSW apparatuses.

FIG 4A and 4B illustrate a front view and isometric view of a pin tool 400 accordance with the present invention. The pin tool 400 has a cylindrical head 402 with a penetration end 412 and a shoulder end 414. The cylindrical head 402 has a profiled perimeter 404. The profile perimeter 404 is configured to generate a churning action in the weld region. For example, the pin tool 400 has 9 mm Diameter cylindrical head 402 with 0.5mm radial lip as the profiled perimeter 404.

The profiled perimeter 404 of the cylindrical head 402 is provided with multiple flutes 406. As used herein "flutes" refer to tooth like shapes that are along the perimeter of the cylindrical head 402. The profiled perimeter 404 can be configured with helical flutes, straight flutes, involute flutes etc. In FIGs 4A and 4B, the profiled perimeter 404 has a helical profile comprising multiple helical flutes 406 arranged at an angle with respect to the penetration axis. The helical flutes 406 capable of generating high stirring or churning action as indicated in FIG 5.

FIG 5 is a schematic representation of the operation of the pin tool 400 in FIG 4A and 4B. In FIG 5, the pin tool 400 is rotated in the direction indicated by arrow 506 along the penetration axis 508. The shoulder tool 504 has a pin-side end 504A that is towards the pin tool 400. The pin-side end 504A of the shoulder tool 504 is maintained on the surface of the joint between the work-pieces to generate frictional heat and forging pressure.

The helical flutes 406 are designed to create helical paths 502 for plasticized material in the weld region to flow. As shown in FIG 5, the pin-side end 504A of the shoulder tool 504 and the pin tool 400 in combination are configured to perform the churning action 510 in the weld region to advantageous obtain a homogenous weld.

Therefore, the weld region material will be perfectly mixed by the churning action 510 of the pin tool 400 using the helical flutes 406. The churning action 510 improves homogeneity of the weld region, which in turn results in refined grain size of the weld region. Also, the yield and tensile strength of the welded region is improved.

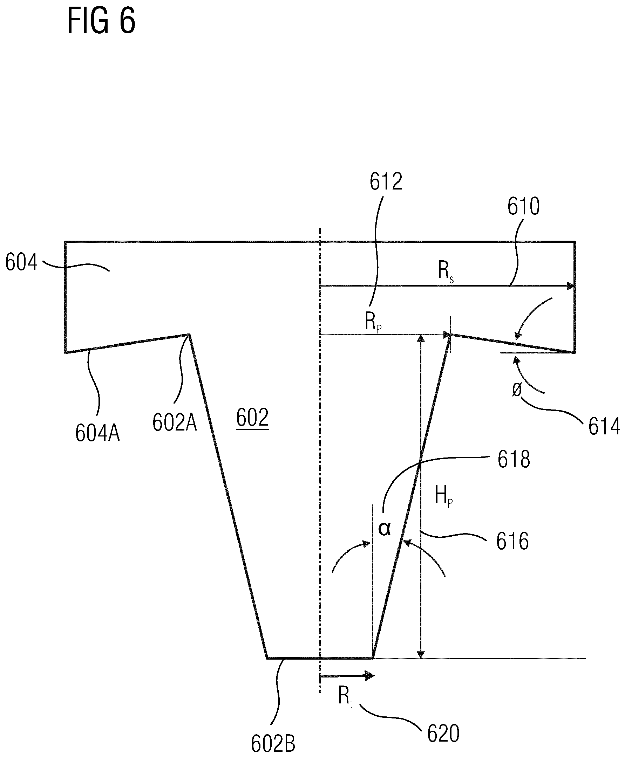

FIG 6 is a schematic representation of a pin tool 602 and a shoulder tool 604 of a FSW apparatus in accordance with the present invention. The pin tool 602 has height $H_p$ 616 and tapers from the shoulder end 602A towards the penetration end 602B. The pin tool 602 tapers with an angle $\alpha$ 618. Accordingly, radius $R_t$ 620 of the penetration end 602B is smaller than the radius $R_p$ 612. The shoulder end 602A of abuts the shoulder tool 604. The shoulder tool 604 has a radius $R_s$ 610 and a pin-side end 604A. The pin side end 604A is configured with an angled profile indicated by $\theta$ 614. The angled profile refers to a concave-like profile of the pin-side end 604A. The angled profile is advantageous as it ensures that the plasticized weld in the weld region is contained during the churning action of the pin tool 602.

The heat generated at the shoulder tool 604, surface of the pin tool 602 and the penetration end 602B can be calculated using the below equations.

Heat at the shoulder tool 604 is $Q_s = \frac{2}{3}\pi\tau_c\omega\left(R_s^3 - R_p^3\right)(1 + tan\theta)$

Heat at the surface of the pin tool 602 is $Q_p = \frac{2}{3}\pi\tau_c\omega\left(R_p^3 - R_t^3\right)\left(\frac{1+tan\alpha}{tan\alpha}\right)$

Heat at the penetration end 602B is $Q_T = \frac{2}{3}\pi\tau_c\omega R_t^3$

The heat generated is also calculated keeping contact sheer stress in mind, where $T_c$ is the contact sheer stress. $T_c = \sigma_y/2$ where $\sigma_y$ is yield strength of the work-pieces. For example, for copper work-pieces yield strength is 210MPa.

At 700°C the yield strength is around 21MPa. The reduction factor =210/21= 10. Typically the normal power required to carry out FSW is 35kW. With the present invention the power required is reduced to 35/10= 3.5kW.

If frictional heat generated due to shoulder tool and viscous force is considered then the power required is 150% of the normal power. For example, copper work-pieces give very high viscous force of 50% then the power required = 150% of actual power = 5.25kW (~6kW). With the present invention the heating power required is 2.3kW. Hence required power input = 6+2.3 = 8.3 kW.

Therefore, the present invention consumes much lesser energy and the energy savings per year is given in the below table.

| Prior Art | Present Power in kW | Total hours of operation | Daily energy consumption in kWhr | Yearly consumption in kWh | Energy Cost in USD | |
|---|---|---|---|---|---|---|
| | 35 | 15 | 525 | 138600 | 16632 | |

(continued)

| Prior Art | Present Power in kW | Total hours of operation | Daily energy consumption in kWhr | Yearly consumption in kWh | Energy Cost in USD | |
|---|---|---|---|---|---|---|
| Present Invention | Revised Power in kW | Total hours of operation | Daily energy consumption in kWhr | Yearly consumption in kWhr | Energy Cost in USD | Net Saving per year |
| | 8.3 | 15 | 124.5 | 32868 | 3944.16 | 12687.84 |

The present invention is advantageous as the localized heating from the bottom non-penetration side ensures that the temperature on the top penetration side of the work-pieces is maintained close to or at the plasticized state. Accordingly, the invention ensures reduction in the plunge force requirement by the pin tool. Therefore, a low power pin drive mechanism is sufficient to perform the friction stir welding. Further, the churning action of the pin tool results in refinement of grain (fine grain), which in turn generates higher yield and tensile strength of the welded region.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope of the invention in its aspects.

FIG 1
Friction Stir Welding (FSW) apparatus 100
pin drive mechanism 102
penetration axis 104
traverse axis 106
shoulder tool 108
pin tool 110
thermal control unit 112
work-pieces 124.

FIG 2A
FSW apparatus 200
pin motor 201
pin spindle 202
penetration axis 204
traverse axis 206
control unit 210
pin tool 212
display 215
heating element 216
motor 218
pin traverse motor 220
Proportional-Integral-Derivative (PID) controller 222 work-pieces 224
thermistor 226
processor 230
thermal control unit 232
weld region 250

FIG 2B
direction of weld 208
Linear index 280

work-pieces 224

FIG 3
heating element 216
pin tool 212
work-pieces 324 and 334
top penetration side (top side) 302
bottom non-penetration side (bottom side) 304 weld region 310
penetration surface of weld region 310A

FIG 4A and 4B
pin tool 400
cylindrical head 402
penetration end 412
shoulder end 414
profiled perimeter 404
helical flutes 406

FIG 5
pin tool 400
helical paths 502
shoulder tool 504
pin-side end 504A
pin rotation direction 506
penetration axis 508
churning action 510

FIG 6
pin tool 602
shoulder end 602A
penetration end 602B
shoulder tool 604
pin-side end 604A
radius $R_s$ 610
radius $R_p$ 612
angled profile indicated by $\theta$ 614
pin height $H_p$ 616
taper angle $\alpha$ 618
radius $R_t$ 620

**Claims**

1. A Friction Stir Welding (FSW) apparatus (100, 200) for welding work-pieces (124, 224, 324, 334), comprising:

    a pin tool (110, 212, 400, 602) with a penetration axis (104, 204, 508) along an axis of penetration of the work-pieces (124, 224, 324, 334), wherein the friction stir welding apparatus (100, 200) is **characterized by** a thermal control unit (112, 232) comprising at least one heating element (216) in thermal contact with the work-pieces (124, 224, 324, 334), the at least one heating element (216) arranged along the penetration axis (104, 204, 508) to effectively plasticize the work-pieces at a weld region (250, 310), whereby a plunge force required by the pin tool (110, 212, 400, 602) to penetrate the weld region (250, 310) is reduced.

2. The FSW apparatus as claimed in the claim 1, wherein the pin tool (110, 212, 400, 602) is configured to homogenize the weld region (250, 310) upon plasticization of the weld region by the at least one heating element.

3. The FSW apparatus as claimed in the claim 1, wherein the pin tool (110, 212, 400, 602) comprises:

    a cylindrical head (402) with a penetration end (412) and a shoulder end (414), the cylindrical head comprising a profiled perimeter (404), wherein the profile perimeter is configured to generate a churning action (510) in the weld region (250, 310).

4. The FSW apparatus as claimed in the claim 3, wherein the profiled perimeter (404) has a helical profile comprising a plurality of helical flutes (406) arranged at an angle with respect to the penetration axis (508).

5. The FSW apparatus as claimed in the claim 3, wherein the pin tool (602) tapers from the shoulder end (602A) towards the penetration end (602B).

6. The FSW apparatus as claimed in the claim 1, wherein the work-pieces (324, 334) include a top penetration side (302) where the pin tool penetrates the work-pieces and a bottom non-penetration side (304) where the at least one heating element (216) is configured to heat the work-pieces (324, 334).

7. The FSW apparatus as claimed in the claim 1, wherein the pin tool (110, 212, 400, 602) is configured to advance along a traverse axis (106, 206, 208) in a direction of weld and the at least one heating element (216) is advanced along the traverse axis (106, 206, 208) at an offset, prior to advancement of the pin tool.

8. The FSW apparatus as claimed in the claim 1, wherein the thermal control unit (232) comprises:

a thermistor (226) to measure a weld temperature of the weld region; and
a cooling element arranged in thermal contact with the work-pieces, to cool the weld region when the weld temperature exceeds a preset threshold.

9. The FSW apparatus as claimed in the claim 1, wherein the thermal control unit (112, 232) is configured to preferential heat work-pieces with dissimilar material.

10. The FSW apparatus as claimed in the claim 1, wherein the at least one heating element (216) includes one of a laser source, a microwave source and a resistive heat source.

11. A method of Friction Stir Welding (FSW) work-pieces (124, 224, 324, 334) with a FSW apparatus (100, 200), the FSW apparatus comprising a pin tool (110, 212, 400, 602) with a penetration axis (104, 204, 508) along an axis of penetration of the work-pieces, the FSW method is **characterized by**:

heating a weld region ((406)) of the work-pieces along the penetration axis (104, 204, 508) of the pin tool (110, 212, 400, 602) to plasticize the work-pieces at the weld region (250, 310);
plunging the pin tool (110, 212, 400, 602) to penetrate the weld region (250, 310) upon plasticization of the weld region, whereby a plunge force required by the pin tool to penetrate the weld region is reduced; and
homogenizing the weld region (250, 310) upon plasticization of the weld region by a churning action (510) of the pin tool.

12. The method as claimed in the claim 11, comprising:

measuring a weld temperature of the weld region (250, 310); and
adjusting a cooling rate of the weld region (250, 310) based upon weld temperature and a preset threshold to ensure optimal heating of the weld region.

13. The method as claimed in the claim 11, comprising:

advancing the at least one heating element (216) along a traverse axis (106, 206, 208) in a direction of weld at an offset, prior to advancement of the pin tool along the traverse axis.

14. The method as claimed in the claim 11, wherein heating a weld region between work-pieces to be welded, along the penetration axis (104, 204, 508) of the pin tool to plasticize the work-pieces at the weld region with at least one heating element, comprises:

preferentially heating dissimilar work-pieces (124, 224, 324, 334) to plasticize the work-pieces uniformly at the weld region (250, 310).

FIG 1

104

100

102

112

108

110

124

106    106

104

FIG 2A

200

201

210

215

232

222

230

220

226

202

204

250

206

216

224

218

206

FIG 2B

208

224

280

FIG 3

# FIG 4A

400
404
402
412

# FIG 4B

400
414
406
406
404
412
414

# FIG 5

506
508
504A
504
504
504A
510
406
502
400

# FIG 6

Europäisches
Patentamt

European
Patent Office

Office européen
des brevets

# EUROPEAN SEARCH REPORT

Application Number

EP 17 18 9464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 640 103 A1 (MITSUBISHI HEAVY IND LTD) 29 March 2006 (2006-03-29) | 1,2,6,7, 10,11 | INV. B23K20/12 |
| Y | * paragraphs [0001], [0011], [0012], [0029], [0041], [0060], [0063], [0078]; figures 1-8,10-13 * | 3-5 | B23K20/22 ADD. B23K103/18 |
| Y | WO 99/52669 A1 (WELDING INST ; W. M. THOMAS ET AL) 21 October 1999 (1999-10-21) * page 5, line 9 - line 37; figures 2-3 * | 3-5 | |
| X | EP 3 053 695 A1 (JFE STEEL CORP) 10 August 2016 (2016-08-10) * paragraph [0013] - paragraph [0015]; figures 4a, 4b * | 1,11 | |
| X | US 2004/046003 A1 (A. VYAS) 11 March 2004 (2004-03-11) * paragraph [0034]; figure 1 * | 1,13 | |
| X | US 2014/027496 A1 (A. CASTILLO ET AL) 30 January 2014 (2014-01-30) | 1,8,9, 11,12 | |
| Y | * paragraphs [0032], [0033], [0037], [0039]; figure 3 * | 14 | TECHNICAL FIELDS SEARCHED (IPC) |
| Y | US 2006/231595 A1 (J. F. QUINN ET AL) 19 October 2006 (2006-10-19) | 14 | B23K |
| A | * paragraphs [0014], [0015], [0016], [0017], [0022]; figures 1-3 * | 9 | |

The present search report has been drawn up for all claims

| Place of search | Date of completion of the search | Examiner |
|---|---|---|
| Munich | 20 December 2017 | Jeggy, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 9464

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2017

| Patent document cited in search report | | | Publication date | Patent family member(s) | | | Publication date |
|---|---|---|---|---|---|---|---|
| EP 1640103 | A1 | | 29-03-2006 | DE | 602005003184 | T2 | 21-08-2008 |
| | | | | EP | 1640103 | A1 | 29-03-2006 |
| | | | | JP | 4468125 | B2 | 26-05-2010 |
| | | | | JP | 2006088208 | A | 06-04-2006 |
| | | | | US | 2006065698 | A1 | 30-03-2006 |
| WO 9952669 | A1 | | 21-10-1999 | AU | 3435199 | A | 01-11-1999 |
| | | | | WO | 9952669 | A1 | 21-10-1999 |
| EP 3053695 | A1 | | 10-08-2016 | CN | 105579184 | A | 11-05-2016 |
| | | | | EP | 3053695 | A1 | 10-08-2016 |
| | | | | JP | WO2015045421 | A1 | 09-03-2017 |
| | | | | KR | 20160051895 | A | 11-05-2016 |
| | | | | US | 2016214203 | A1 | 28-07-2016 |
| | | | | WO | 2015045421 | A1 | 02-04-2015 |
| US 2004046003 | A1 | | 11-03-2004 | AT | 316840 | T | 15-02-2006 |
| | | | | CN | 1593834 | A | 16-03-2005 |
| | | | | DE | 602004000357 | T2 | 09-11-2006 |
| | | | | EP | 1514632 | A1 | 16-03-2005 |
| | | | | JP | 2005088080 | A | 07-04-2005 |
| | | | | KR | 20050026979 | A | 17-03-2005 |
| | | | | US | 2004046003 | A1 | 11-03-2004 |
| US 2014027496 | A1 | | 30-01-2014 | CN | 103567626 | A | 12-02-2014 |
| | | | | CN | 203541844 | U | 16-04-2014 |
| | | | | TW | 201410368 | A | 16-03-2014 |
| | | | | US | 2014027496 | A1 | 30-01-2014 |
| US 2006231595 | A1 | | 19-10-2006 | CN | 101203352 | A | 18-06-2008 |
| | | | | DE | 112006000925 | T5 | 21-05-2008 |
| | | | | KR | 20080003887 | A | 08-01-2008 |
| | | | | US | 2006231595 | A1 | 19-10-2006 |
| | | | | WO | 2006113011 | A2 | 26-10-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9033205 B2
- US 6793118 B2
- US 7832613 B2